# DEMANDE DE BREVET EUROPEEN

(11) **EP 1 262 299 A1**
(43) Date de publication de la demande: **04.12.2002**
(21) Numéro de dépôt: 01870115.1
(22) Date de dépôt: 30.05.2001
(51) Int. Cl.: B29C 45/14, B29C 45/44

(54) **Procede et outillage pour injection silicone a cotes finies**

(71) Demandeur: Techspace Aero S.A., 4041 Herstal (BE)
(72) Inventeur: Leszczynski, Charles, 4680 Hermee (BE)
(74) Mandataire: Van Malderen, Joelle

(57) **Abrégé**

La présente invention se rapporte à un procédé de moulage et démoulage d'une pièce composite comprenant au moins une partie métallique et une partie constituée d'un élastomère injecté à froid, de préférence un élastomère silicone, ledit élastomère étant directement injecté à cotes finies dans un moule à symétrie de révolution, de préférence cylindrique, caractérisé par les étapes suivantes :
- on immobilise au moins la partie métallique dans le moule ;
- on injecte ledit élastomère à froid dans le moule ;
- après polymérisation, on procède au démoulage par ouverture radiale du moule.

## Description

### Objet de l'invention

La présente invention se rapporte à un nouveau procédé d'injection d'un élastomère, de préférence à base de silicone, directement à cotes finies, sans usinage ultérieur. Cette technique trouve notamment une application dans la fabrication d'éléments de moteurs pour la propulsion aéronautique et spatiale.

L'invention se rapporte également à l'outillage nécessaire pour la mise en oeuvre du procédé.

### Etat de la technique

Les turboréacteurs comprennent des parties rotoriques comportants des aubes tournantes et des parties statoriques comportant des redresseurs. Ceux-ci sont essentiellement constitués d'aubes fixes reliant une virole extérieure à une virole intérieure, toutes deux concentriques. L'étanchéité relative entre ces éléments est assurée en faisant appel à des formes variées d'étanchéité dynamique. En la matière, il est connu d'utiliser des pistes statiques réalisées en un élément élastomère tel que le silicone.

La technique usuelle comprend les opérations :
- d'injection de silicone bicomposant à froid dans un moule étanche;
- d'usinage du silicone injecté, après polymérisation et démoulage, afin d'obtenir la précision dimensionnelle souhaitée.

Supposons que le moule soit de forme annulaire. Avant injection, une aube (ou une pluralité d'aubes) est (sont) disposée(s) relativement au moule, suivant l'axe de révolution de ce dernier. Selon l'état de la technique, le démoulage est réalisé axialement, c'est à dire selon l'axe de révolution du moule. Dans ce cas, pour permettre le démoulage, il est obligatoire de ménager des dépouilles, par le biais d'une forme de moule présentant une légère conicité positive dans l'axe de démoulage. Il faut donc injecter dans un tel moule plus de silicone que nécessaire et procéder ensuite à l'usinage de la matière excédentaire.

Le fait de vouloir arriver directement à la géométrie finale après démoulage, en l'occurrence ici le diamètre final, sans usinage complémentaire, impliquerait une solution ne prévoyant pas de telles dépouilles.

### Buts de l'invention

La présente invention vise à fournir une solution qui ne présente pas les inconvénients de l'état de la technique.

En particulier, l'invention vise à l'obtention des pièces injectées, directement à cotes finies et donc ne nécessitant pas d'usinage ultérieur pour enlever la matière excédentaire.

Un but complémentaire de l'invention est de fournir un outillage d'injection permettant un démoulage ne nécessitant pas de dépouille.

### Principaux éléments caractéristiques de l'invention

La présente invention concerne un procédé de moulage et démoulage d'une pièce composite comprenant au moins une partie métallique et une partie constituée d'un élastomère injecté à froid, de préférence un élastomère silicone, ledit élastomère étant directement injecté à cotes finies dans un moule à symétrie de révolution, de préférence cylindrique, caractérisé par les étapes suivantes :
- on immobilise au moins la partie métallique dans le moule ;
- on injecte ledit élastomère à froid dans le moule ;
- après polymérisation, on procède au démoulage par ouverture radiale du moule.

Avantageusement, l'ouverture radiale du moule est effectuée en désolidarisant partiellement et radialement au moins deux secteurs, articulés dans le moule et en contact avec la pièce injectée, par rotation autour d'au moins un axe pivot commun, qui peut comprendre une goupille.

De préférence, préalablement à l'opération de démoulage, on déverrouille une cassette de verrouillage entourant extérieurement les parties du moule, en particulier les secteurs, en contact avec la pièce à injecter.

La présente invention concerne également un outillage de moulage et démoulage d'une pièce composite comprenant au moins une partie métallique et une partie constituée d'un élastomère injecté à froid, de préférence un élastomère silicone, ledit élastomère étant directement injecté à cotes finies dans un moule à symétrie de révolution, caractérisé en ce qu'il comprend au moins deux secteurs, articulés dans le moule, en contact avec la pièce injectée et pouvant pivoter autour d'au moins un axe commun, lesdits secteurs étant maintenus dans une cassette de verrouillage pendant l'opération de moulage.

Un autre aspect de la présente invention concerne un procédé de moulage et démoulage d'une pièce composite longitudinale comprenant au moins une partie métallique et une partie constituée d'un élastomère injecté à froid, de préférence un élastomère silicone, ledit élastomère étant directement injecté à cotes finies dans un moule, caractérisé par les étapes suivantes :
- on immobilise au moins la partie métallique dans le moule ;
- on injecte ledit élastomère à froid dans le moule, de préférence selon l'axe longitudinal de la pièce ;
- après polymérisation, on procède au démoulage par ouverture radiale du moule, c'est à dire selon une direction perpendiculaire à l'axe longitudinal de la pièce.

L'invention a encore pour objet de proposer un outillage de moulage et démoulage d'une pièce composite comprenant au moins une partie métallique et une partie constituée d'un élastomère injecté à froid, de préférence un élastomère silicone, ledit élastomère étant directement injecté à cotes finies dans un moule, caractérisé en ce qu'il comprend au moins deux sous-ensembles constitutifs, articulés dans le moule, en contact avec la pièce injectée et pouvant pivoter autour d'au moins un axe commun, lesdits sous-ensembles étant maintenus dans une cassette de verrouillage pendant l'opération de moulage.

Enfin, l'invention trouve plus particulièrement son application à un procédé de fabrication de pistes statiques d'étanchéité entre parties statoriques et rotoriques de turboréacteurs, lesdites pistes étant réalisées en élastomère injecté à froid, de préférence en silicone bicomposant.

### Brève description des figures

La figure 1 représente une vue en coupe d'un outillage d'injection selon l'état de la technique.

La figure 2 représente une vue en perspective d'un outillage d'injection permettant un démoulage radial selon la présente invention.

La figure 3 représente une vue de détail correspondant au dispositif de démoulage radial représenté à la figure 2.

### Description d'une forme d'exécution selon l'état de la technique

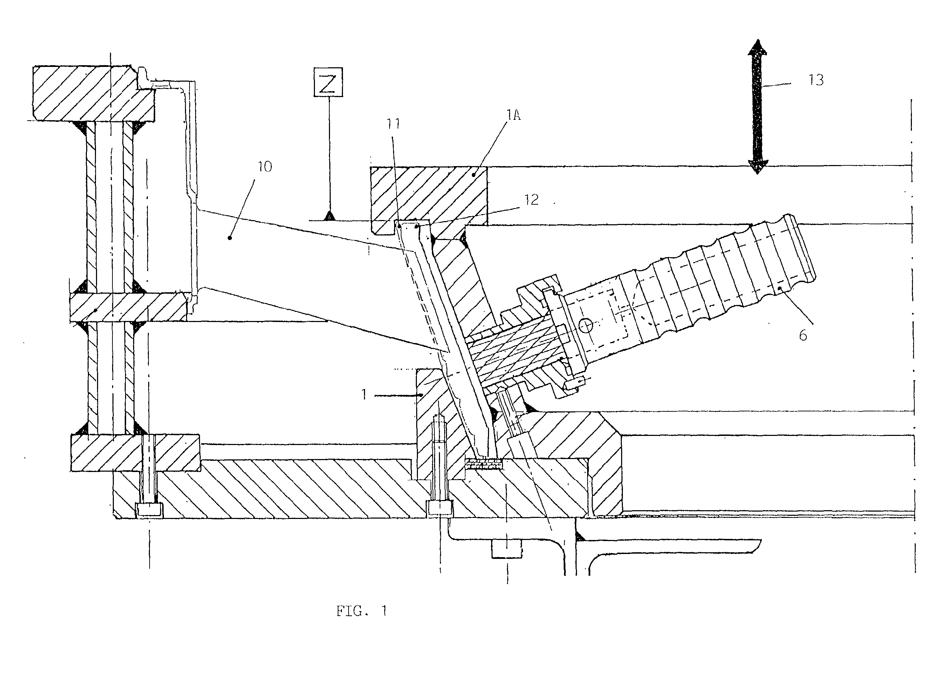

A la figure 1, on a représenté un moule 1 d'injection de silicone au niveau d'une aube 10 de redresseur solidarisée à sa virole intérieure 11. Le silicone est injecté par un ou plusieurs injecteurs 6 autour du pied de l'aube. Après injection et polymérisation, le démoulage se fait par translation axiale 13 d'une partie du moule 1A. Pour permettre le démoulage, il est donc impératif de ménager des dépouilles 12. La matière excédentaire est ensuite usinée pour arriver aux cotes finales.

### Description d'une forme d'exécution préférée de l'invention

Le principe à la base de l'invention repose sur la conception d'un outillage d'injection permettant un démoulage radial, donc sans besoin de dépouille.

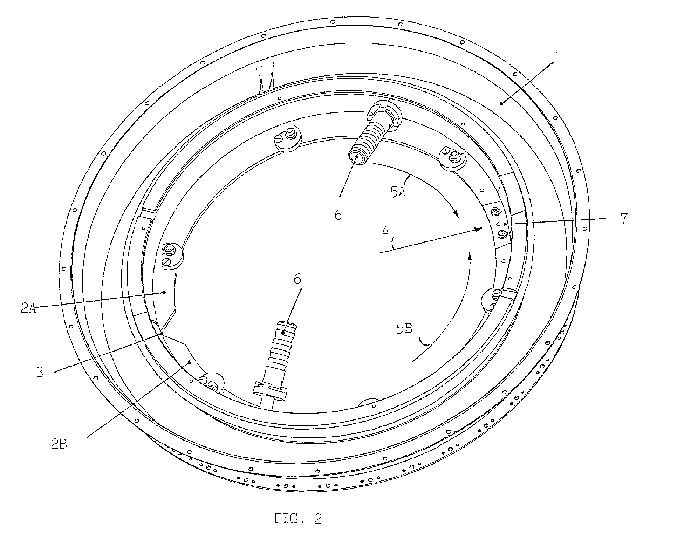

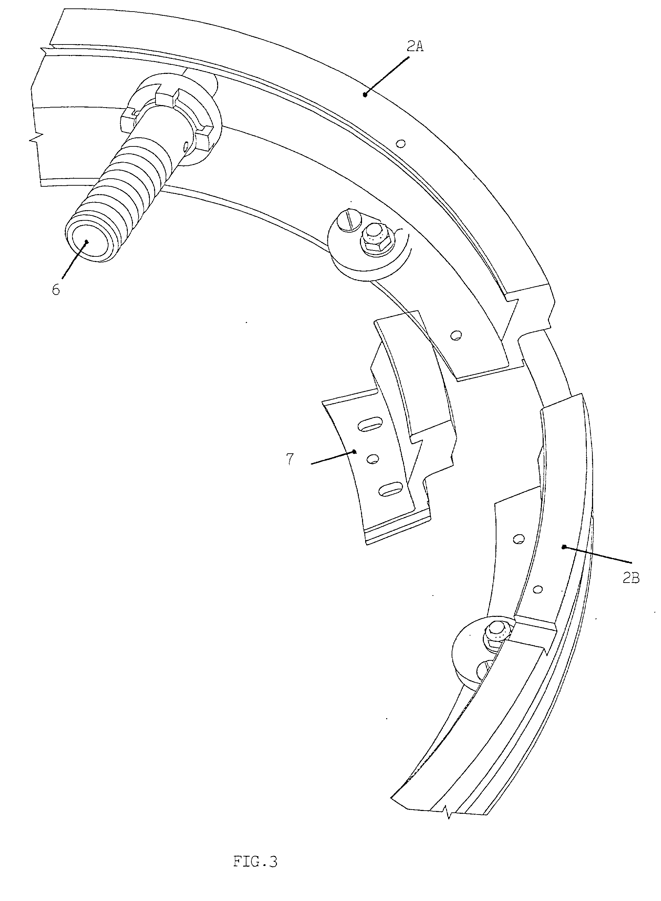

Ceci est rendu possible par l'utilisation d'un moule constitué de plusieurs parties articulées, tel que représenté à la figure 2. Le moule présente, d'une part, des secteurs 2A, 2B ayant bien entendu une forme adaptée à la pièce à injecter et d'autre part, au moins un axe pivot 3 qui permet de désolidariser partiellement, dans la direction radiale 4 par rapport au moule, les secteurs 2A, 2B de la pièce injectée. Les axes pivots sont par exemple matérialisés sous la forme de goupilles 3. Les secteurs sont maintenus dans un tiroir de verrouillage 1, par exemple une cassette. Après polymérisation, on déverrouille la cassette de démoulage par translation de la clé 7 et on écarte ensuite les secteurs 2A, 2B de la pièce moulée, par pivotement selon 5A et 5B autour de l'axe pivot 3. Le mécanisme de verrouillage est détaillé à la figure 3. Le sens des flèches 4, 5A et 5B à la figure 2 correspond au verrouillage du moule. Le sens opposé correspond bien entendu au déverrouillage du moule.

Suivant l'invention, on obtient directement des géométries à cotes finies, ne présentant pas de dépouille, et donc qui ne requièrent pas le recours à un usinage ultérieur.

Le fait d'éviter l'usinage permet des économies :
- en terme de gaspillage de matériau injecté sous forme de dépouilles (quantité de déchets et coût du matériau) ;
- en terme de coût des opérations d'usinage (salaires, énergie, immobilisation machine, fluides et outils de coupe) ;
- en terme de cycle de fabrication.

## Revendications

1. Procédé de moulage et démoulage d'une pièce composite comprenant au moins une partie métallique et une partie constituée d'un élastomère injecté à froid, de préférence un élastomère silicone, ledit élastomère étant directement injecté à cotes finies dans un moule à symétrie de révolution, de préférence cylindrique, **caractérisé par** les étapes suivantes :
- on immobilise au moins la partie métallique dans le moule ;
- on injecte ledit élastomère à froid dans le moule ;
- après polymérisation, on procède au démoulage par ouverture radiale du moule.

2. Procédé selon la revendication 1, **caractérisé en ce que** l'ouverture radiale du moule est effectuée en désolidarisant partiellement et radialement au moins deux secteurs (2A, 2B), articulés dans le moule et en contact avec la pièce injectée, par rotation autour d'au moins un axe pivot (3) commun.

3. Procédé selon la revendication 2 **caractérisé en ce que** la ledit axe pivot (3) comprend une goupille.

4. Procédé selon l'une quelconque des revendications précédentes, **caractérisé en ce que**, préalablement à l'opération de démoulage, on déverrouille une cassette de verrouillage (1) entourant extérieurement les parties du moule, en particulier les secteurs (2A, 2B), en contact avec la pièce à injecter.

5. Outillage de moulage et démoulage d'une pièce composite comprenant au moins une partie métallique et une partie constituée d'un élastomère injecté à froid, de préférence un élastomère silicone, ledit élastomère étant directement injecté à cotes finies dans un moule à symétrie de révolution, pour la mise en oeuvre du procédé selon l'une quelconque des revendications précédentes, **caractérisé en ce qu'**il comprend au moins deux secteurs (2A, 2B), articulés dans le moule, en contact avec la pièce injectée et pouvant pivoter autour d'au moins un axe (3) commun, lesdits secteurs étant maintenus dans une cassette de verrouillage (1) pendant l'opération de moulage.

6. Procédé de moulage et démoulage d'une pièce composite longitudinale comprenant au moins une partie métallique et une partie constituée d'un élastomère injecté à froid, de préférence un élastomère silicone, ledit élastomère étant directement injecté à cotes finies dans un moule, **caractérisé par** les étapes suivantes :
- on immobilise au moins la partie métallique dans le moule ;
- on injecte ledit élastomère à froid dans le moule, de préférence selon l'axe longitudinal de la pièce ;
- après polymérisation, on procède au démoulage par ouverture radiale du moule, c'est à dire selon une direction perpendiculaire à l'axe longitudinal de la pièce.

7. Outillage de moulage et démoulage d'une pièce composite comprenant au moins une partie métallique et une partie constituée d'un élastomère injecté à froid, de préférence un élastomère silicone, ledit élastomère étant directement injecté à cotes finies dans un moule, pour la mise en oeuvre du procédé selon la revendication 6, **caractérisé en ce qu'**il comprend au moins deux sous-ensembles constitutifs (2A, 2B), articulés dans le moule, en contact avec la pièce injectée et pouvant pivoter autour d'au moins un axe (3) commun, lesdits sous-ensembles étant maintenus dans une cassette de verrouillage (1) pendant l'opération de moulage.

8. Procédé de fabrication de pistes statiques d'étanchéité entre parties statoriques et rotoriques de turboréacteurs, lesdites pistes étant réalisées en élastomère injecté à froid, de préférence en silicone bicomposant, au moyen d'un outillage de moulage et démoulage selon la revendication 7.
